# EUROPÄISCHE PATENTANMELDUNG

(11) **EP 0 887 626 A1**
(43) Veröffentlichungstag der Anmeldung: **30.12.1998**
(21) Anmeldenummer: 98111236.0
(22) Anmeldetag: 18.06.1998
(51) Int. Cl.: G01F 1/00, G01F 1/32, G01F 1/42

(54) **Substitutions-Einbausätze für Volumen-Durchflussaufnehmer und entsprechende Wirbel-Durchflussaufnehmer**

(30) Priorität: 24.06.1997 EP 97110288
(71) Anmelder: Endress + Hauser Flowtec AG, CH-4153 Reinach BL 1 (CH)
(72) Erfinder: Touzin, Michel R., Dipl.-Ing., 79689 Maulburg (DE); Ohle, Frank, Dr. rer. nat., 79585 Steinen (DE)
(74) Vertreter: Morstadt, Volker, Dipl.-Ing.

(57) **Zusammenfassung**

Diese Einbausätze sind für an einem Meßort installierte Differenzdruck-Volumen-Durchflußaufnehmer (101, 102, 103, 104, 105, 106) mit Druckabnahme-Bohrungen (111, 121) und mit einer Standard-Blendenscheibe (13) gedacht, die zwischen zwei von einem zu messenden Fluid durchströmten Rohrleitungen (1, 2) fluiddicht eingespannt ist. Eine erste Variante des Einbausatzes umfaßt eine die Blendenscheibe ersetzende Ringscheibe (23). Deren Dicke ist gleich der Dicke der Blendenscheibe und deren lichte Weite gleich der lichten Weite der Rohrleitungen. In der lichten Weite der Ringscheibe ist ein einziger Staukörper (2311, 2312, 2313, 2314, 2315, 2316, 2317, 2318, 2319) angeordnet, der in Strömungsrichtung höchstens so dick wie die Ringscheibe ist. Die Bohrung (111) der Rohrleitung (1) wird durch eine Vorrichtung (18) nach Entfernen des zugehörigen Drucksensors fluiddicht verschlossen. In die Bohrung (121) der Rohrleitung (2) wird nach Entfernen des zugehörigen Drucksensors ein Wirbelsensor (19) fluiddicht eingesetzt. Nach einer zweiten Variante werden beide Bohrungen (111, 121) der Rohrleitungen (1, 2) durch Vorrichtungen (18, 28) nach Entfernen der zugehörigen Drucksensoren fluiddicht verschlossen. Ferner wird ein Wirbelsensor (29; 39, 40) an oder in der Rohrleitung (2) nahe bei der Ringscheibe (23) angebracht. Bei einer dritten Variante umfaßt ein Wirbel-Durchflußaufnehmer (10') die Ringscheibe (23) und den Wirbelsensor (29; 39, 40).

## Beschreibung

Die Erfindung betrifft Substitutions-Einbausätze für im Feld an einem Meßort bereits installierte Volumen-Durchflußaufnehmer, die auf dem Prinzip der Messung des über einer Blende vorhandenen Differenzdrucks beruhen.

Ferner betrifft die Erfindung Wirbel-Durchflußaufnehmer, die durch die Substitution mittels der Einbausätze realisiert worden sind oder die nach diesem Substitutions-Prinzip schon werkseitig hergestellt werden.

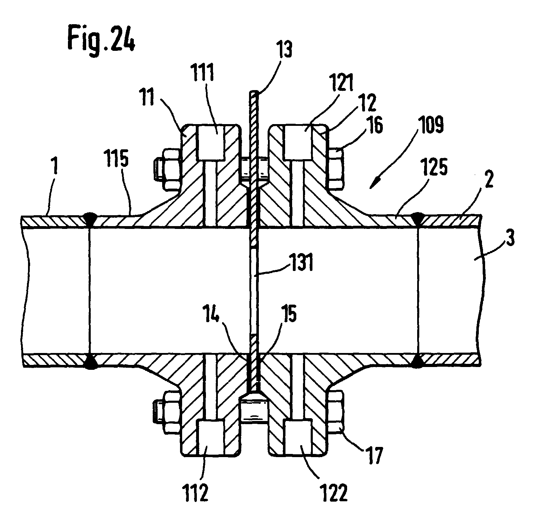

Volumen-Durchflußaufnehmer, die auf dem Prinzip der Messung des über einer Blende vorhandenen Differenzdrucks beruhen, sind in der Durchfluß-Meßtechnik weit verbreitet, vgl. die Zeitschrift "Chemical Engineering", Mai 1996, Seiten 94 bis 102. Sie haben eine Blendenscheibe, die eine genormte Dicke und eine genormte lichte Weite aufweist und die zwischen einer ersten und einer zweiten, von einem zu messenden Fluid durchströmten Rohrleitung fluiddicht eingespannt ist. Dies geschieht meist mittels zwei Flanschen, von denen einer am Ende der ersten Rohrleitung und der andere am dem dem einen Flansch zugewandten Ende der zweiten Rohrleitung angebracht ist. Weitere Einzelheiten sind unten in Verbindung mit Fig. 24 noch näher erläutert.

Die Blendenscheibe hat eine kleinere lichte Weite als die Rohrleitungen. Mit einer nahe bei der Blendenscheibe angebrachten Bohrung der ersten Rohrleitung steht ein erster Drucksensor für den Fluiddruck stromaufwärts von der Blendenscheibe in Wirkverbindung. Mit einer nahe bei der Blendenscheibe angebrachten Bohrung der zweiten Rohrleitung steht ein zweiter Drucksensor für den Fluiddruck stromabwärts von der Blendenscheibe in Wirkverbindung.

Oft befindet sich die Bohrung der ersten Rohrleitung im erwähnten, dieser zugeordneten Flansch und die Bohrung der zweiten Rohrleitung im erwähnten, zu dieser gehörenden Flansch.

Es sind auch Kompaktversionen üblich, bei denen die Bohrungen zur Abnahme des Druckes, die Drucksensoren und eine ihnen zugeordnete Auswerte-Elektronik mit Gehäuse miteinander vereinigt sind.

Da die Blendenscheibe eine geringere lichte Weite als die beiden Rohrleitungen hat, also eine Verengung des Strömungskanal bildet, entsteht über ihr bei strömendem Fluid entsprechend dem Bernoulli'schen Gesetz eine Druckdifferenz, aus der sich der Volumendurchfluß bestimmen läßt, der proportional zur Quadratwurzel aus dem Quotienten Druckdifferenz zu Dichte des Fluids ist.

Bei derartigen Standardblenden-Volumen-Durchflußaufnehmern liegt die erzielbare Meßgenauigkeit lediglich bei ca. 2%. Diese läßt sich allerdings nur erreichen, wenn möglichst immer dasselbe Strömungsprofil an der Meßstelle auftritt. Dies erfordert lange Einlauf- bzw. Auslaufstrecken vor- bzw. hinter der Meßstelle; es müssen also ausreichend lange, gerade Rohrstrecken zur Stabilisierung des Strömungsprofils vorgesehen werden. Ferner ist der Meßbereich auf etwa 1:3 begrenzt.

Auch sind die Blendenscheiben anfällig gegen Verschmutzung; da sich dadurch ihr freier Nutzquerschnitt verändert, treten Meßfehler auf. Auch kann der Innenrand der Blendenscheibe von Feststoffteilchen, die vom Fluid transportiert werden, abgetragen werden, so daß sich der Nutzquerschnitt allmählich vergrößert. Somit ist auch die Langzeit-Konstanz der Meßgenauigkeit ungenügend.

Ferner kann die Verengung des Strömungskanals durch die Blendenscheibe auch dazu führen, daß sich im Abschattungsbereich direkt hinter ihr eine Strömungsform ausbildet, die z.B. zu unerwünschten Ablagerungen von im Fluid vorhandenen Feststoffen im von der Blendenscheibe und der Wand der zweiten Rohrleitung gebildeten Winkelbereich führt.

Schließlich führt die Verengung des Strömungskanals durch die Blendenscheibe zu einem nicht unerheblichen bleibenden (im Englischen: non-recoverable) Druckverlust im Fluid.

Zur Behebung dieser Nachteile und zur Verbesserung der Meßgenauigkeit unter möglichst weitgehender Beibehaltung von bereits installierten und durch das Differenzdruck-Meßprinzip modifizierten Komponenten besteht eine erste Variante der Erfindung daher in einem Substitutions-Einbausatz für einen an einem Meßort installierten Volumendurchflußaufnehmer,
- der eine eine genormte Dicke aufweisende Blendenscheibe,
   -- die zwischen einer ersten und einer zweiten, von einem zu messenden Fluid durchströmten Rohrleitung fluiddicht eingespannt ist und
   -- die eine kleinere lichte Weite als die Rohrleitungen hat,
- einen mit einer in der ersten Rohrleitung nahe bei der Blendenscheibe angebrachten Bohrung in Wirkverbindung stehenden ersten Drucksensor für den Fluiddruck vor der Blendenscheibe und
- einen mit einer in der zweiten Rohrleitung nahe bei der Blendenscheibe angebrachten Bohrung in Wirkverbindung stehenden zweiten Drucksensor für den Fluiddruck hinter der Blendenscheibe aufweist,
   welcher Substitutions-Einbausatz umfaßt:
- eine die Blendenscheibe ersetzende Ringscheibe,
   -- deren Dicke gleich der Dicke der Blendenscheibe ist,
   -- deren lichte Weite gleich der lichten Weite der Rohrleitungen ist und
   -- in deren lichter Weite ein einziger Staukörper angeordnet ist,
      --- der in Strömungsrichtung höchstens so dick wie die Ringscheibe ist,
- eine Vorrichtung zum fluiddichten Verschließen der Bohrung der ersten Rohrleitung nach Entfernen des ersten Drucksensors und
- einen Wirbelsensor zum fluiddichten Einsetzen in die Bohrung der zweiten Rohrleitung nach Entfernen des zweiten Drucksensors.

Zur Behebung der oben erläuterten Nachteile und zur Verbesserung der Meßgenauigkeit unter möglichst weitgehender Beibehaltung von bereits installierten bzw. durch das Differenzdruck-Meßprinzip modifizierten Komponenten besteht ferner eine zweite Variante der Erfindung in einem Substitutions-Einbausatz für einen an einem Meßort installierten Volumendurchflußaufnehmer,
- der eine eine genormte Dicke aufweisende Blendenscheibe,
   -- die zwischen einer ersten und einer zweiten, von einem zu messenden Fluid durchströmten Rohrleitung fluiddicht eingespannt ist und
   -- die eine kleinere lichte Weite als die Rohrleitungen hat,
- einen mit einer in der ersten Rohrleitung nahe bei der Blendenscheibe angebrachten Bohrung in Wirkverbindung stehenden ersten Drucksensor für den Fluiddruck vor der Blendenscheibe und
- einen mit einer in der zweiten Rohrleitung nahe bei der Blendenscheibe angebrachten Bohrung in Wirkverbindung stehenden zweiten Drucksensor für den Fluiddruck hinter der Blendenscheibe aufweist,
   welcher Substitutions-Einbausatz umfaßt:
- eine die Blendenscheibe ersetzende Ringscheibe,
   -- deren Dicke gleich der Dicke der Blendenscheibe ist,
   -- deren lichte Weite gleich der lichten Weite der Rohrleitungen ist und
   -- in deren lichter Weite ein einziger Staukörper angeordnet ist,
      --- der in Strömungsrichtung höchstens so dick wie die Ringscheibe ist,
- eine Vorrichtung zum fluiddichten Verschließen der Bohrung der ersten Rohrleitung nach Entfernen des ersten Drucksensors,
- eine Vorrichtung zum fluiddichten Verschließen der Bohrung der zweiten Rohrleitung nach Entfernen des zweiten Drucksensors und
- einen Wirbelsensor,
   -- der an oder in der zweiten Rohrleitung nahe bei der Ringscheibe angebracht ist.

Nach einer dritten Variante besteht die Erfindung schließlich in einem Wirbel-Durchflußaufnehmer, der umfaßt:
- eine eine vorgegebene Dicke aufweisende Ringscheibe,
   -- die zwischen einer ersten und einer zweiten, von einem zu messenden Fluid durchströmten Rohrleitung fluiddicht einzuspannen ist,
   -- deren lichte Weite gleich der lichten Weite der Rohrleitungen ist und
   -- in deren lichter Weite ein einziger Staukörper angeordnet ist,
      --- der in Strömungsrichtung höchstens so dick wie die Ringscheibe ist, und
- einen Wirbelsensor,
   -- der an oder in der zweiten Rohrleitung nahe bei der Ringscheibe angebracht ist.

Nach einer ersten bevorzugten Ausgestaltung der zweiten Variante der Erfindung und einer ersten bevorzugten Ausgestaltung von deren dritter Variante ist der Wirbelsensor in die Wand der zweiten Rohrleitung fluiddicht eingesetzt und umfaßt ein kapazitives Sensorelement.

Nach einer zweiten bevorzugten Ausgestaltung der zweiten Variante der Erfindung und einer zweiten bevorzugten Ausgestaltung von deren dritter Variante umfaßt der Wirbelsensor eine Ultraschall-Anordnung mit zwei diametral auf der Wand der zweiten Rohrleitung fixierten Ultraschallwandlern.

Den drei Varianten der Erfindung liegt die gemeinsame Idee zugrunde, das eher ungenaue und nachteilige Blenden/Differenzdruck-Meßprinzip an dessen Einbauort durch das wesentlich genauere und langzeit-stabilere Wirbel-Meßprinzip zu ersetzen und dabei so wenig wie möglich neue Komponenten zu benutzen.

Dies gelingt - und darin ist bereits ein erster Vorteil der Erfindung zu sehen - schon allein dadurch, daß die Blendenscheibe durch die erfindungsgemäße Ringscheibe mit zugehörigem Staukörper und die beiden Drucksensoren durch den erfindungsgemäßen Wirbelsensor unter fluid-dichtem Verschluß der nicht mehr benötigten Bohrung bzw. Bohrungen des Drucksensors bzw. der Drucksensoren ersetzt werden.

Ein anderer Vorteil besteht darin, daß bei der Erfindung der Meßbereich größer als 1:3, nämlich immer größer als 1:10 ist. Durchschnittliche Werte sind z.B.: Bei Gas 1:10, bei Dämpfen 1:30, bei Flüssigkeiten 1:40.

Ein weiterer Vorteil besteht darin, daß bei de rErfindung keine Werte einer Druckdifferenz gemessen werden, sondern eine Wirbelfrequenz, so daß kein Nullpunktabgleich erforderlich ist.

Schließlich tritt eine immer unerwünschte Kavitation erst bei höheren Strömungsgeschwindigkeiten auf als bei Standardblenden, so daß höhere Strömungsgeschwindigkeiten zugelassen werden können. Dies ist besonders wichtig bei Flüssigkeiten mit hohem Dampfdruck, z.B. Benzin.

Die Erfindung wird nun anhand der Figuren der Zeichnung näher erläutert, in der Ausführungsbeispiele, meist vollständig im Längsschnitt, dargestellt sind. In den Figuren sind gleiche Teile mit denselben Bezugszeichen versehen, die, wenn sie bereits in einer Figur angegeben sind, in nachfolgenden Figuren der Übersichtlichkeit halber manchmal weggelassen sind.
- Fig. 1 zeigt: ein erstes Ausführungsbeispiel eines mit einem Substitutions-Einbausatz nach der ersten Variante der Erfindung versehenen Volumen-Durchflußaufnehmers,
- Fig. 2 zeigt: ein zweites Ausführungsbeispiel eines mit einem Substitutions-Einbausatz nach der ersten Variante der Erfindung versehenen Volumen-Durchflußaufnehmers,
- Fig. 3 zeigt: ein drittes Ausführungsbeispiel eines mit einem Substitutions-Einbausatz nach der ersten Variante der Erfindung versehenen Volumen-Durchflußaufnehmers,
- Fig. 4 zeigt: ein viertes Ausführungsbeispiel eines mit einem Substitutions-Einbausatz nach der ersten Variante der Erfindung versehenen Volumen-Durchflußaufnehmers,
- Fig. 5 zeigt: ein erstes Ausführungsbeispiel eines mit einem Substitutions-Einbausatz nach der zweiten Variante der Erfindung versehenen Volumen-Durchflußaufnehmers,
- Fig. 6 zeigt: ein zweites Ausführungsbeispiel eines mit einem Substitutions-Einbausatz nach der zweiten Variante der Erfindung versehenen Volumen-Durchflußaufnehmers,
- Fig. 7 zeigt: ein erstes Ausführungsbeispiel eines Volumen-Durchflußaufnehmers nach der dritten Variante der Erfindung,
- Fig. 8 zeigt: ein zweites Ausführungsbeispiel eines Volumen-Durchflußaufnehmers nach der dritten Variante der Erfindung,
- Fig. 9 bis 17 zeigen: Vertikalschnitte parallel zur Scheibenebene von neun Ausführungsbeispielen einer bei der Erfindung zu verwendenden Ringscheibe,
- Fig. 18 bis 23 zeigen: bevorzugte Formen des Horizontal-Querschnitts von Ausführungsbeispielen des im Lumen der Ringscheibe angeordneten Staukörper, und
- Fig. 24 zeigt: ein Beispiel eines oben bereits erwähnten Differenzdruck-Volumen-Durchflußaufnehmers nach dem Stand der Technik.

Vor der Erläuterung der Erfindung sollen zunächst anhand des Längsschnitts der Fig. 24 diejenigen Teile eines üblichen Differenzdruck-Volumen-Durchflußaufnehmers beschrieben werden, die in Verbindung mit der Erfindung wichtig sind.

An einem Meßort ist ein Durchflußaufnehmer 109 zwischen einer ersten und einer zweiten Rohrleitung 1, 2 dauernd installiert, die im Betrieb von einem zu messenden Fluid, z.B. einer Flüssigkeit, einem Gas oder einem Dampf, durchströmt werden.

In Fig. 24 ist die dauernde Installation durch Schweißen erfolgt, wie durch die gezeichneten Schweißnähte veranschaulicht ist. Es sind auch andere Befestigungsarten zwischen Durchflußaufnehmer und Rohrleitungen üblich; davon sind einige in Verbindung mit den Ausführungsbeispielen unten erläutert.

Der Durchflußaufnehmer 109 enthält einen mit der ersten Rohrleitung 1 verschweißten ersten Flansch 11 und einen mit der zweiten Rohrleitung 2 verschweißten zweiten Flansch 12. Der Flansch 11 bzw. 12 ist einstückig mit einem kurzen Rohrstück 115 bzw. 125 versehen, das mit der entsprechenden Rohrleitung 1 bzw. 2 stumpf verschweißt ist.

Die beiden Flansche 11, 12 haben die gleiche Nennweite (= Innendurchmesser) wie die beiden Rohrleitungen 1, 2. Von den beiden Rohrleitungen 1, 2 und den beiden Flanschen 11, 12 wird somit ein Strömungskanal 3 konstanter Nennweite gebildet.

Die beiden Flansche 11, 12 sind unter Zwischenlage von Ringdichtungen 14, 15 und einer Blendenscheibe 13 mittels Schrauben 16, 17 fluiddicht miteinander verbunden. Dadurch ist die Blendenscheibe 13 fluiddicht eingespannt. Diese hat eine zentrale Bohrung 131 mit einer kleineren lichten Weite als die Rohrleitungen 1, 2.

Im ersten Flansch 11 sind zwei auf einem Durchmesser liegende Radialbohrungen 111, 112 angeordnet, die in den Strömungskanal 3 münden. In vergleichbarer Weise befinden sich im zweiten Flansch 12 Radialbohrungen 121, 122, die ebenfalls in den Strömungskanal 3 münden.

Da in den Flanschen 11, 12 die vier Radialbohrungen 111, 112, 121, 122 angeordnet sind, wird erreicht, daß sich diese nahe bei der in der angebrachten Bohrung 131 befinden und somit zur Abnahme des im Fluid stromaufwärts bzw. stromabwärts von der Blendenscheibe 13 herrschenden Drucks geeignet sind.

Mit mindestens einer der Radialbohrungen 111, 112 bzw. mit mindestens einer der Radialbohrungen 121, 122 steht ein erster bzw. ein zweiter Drucksensor in Wirkverbindung. Da hierfür verschiedene Möglichkeiten üblich sind, sind die beiden Drucksensoren nicht gezeichnet. Die nichtbenutzten Radialbohrungen sind fluiddicht zu verschließen, was ebenfalls nicht veranschaulicht ist.

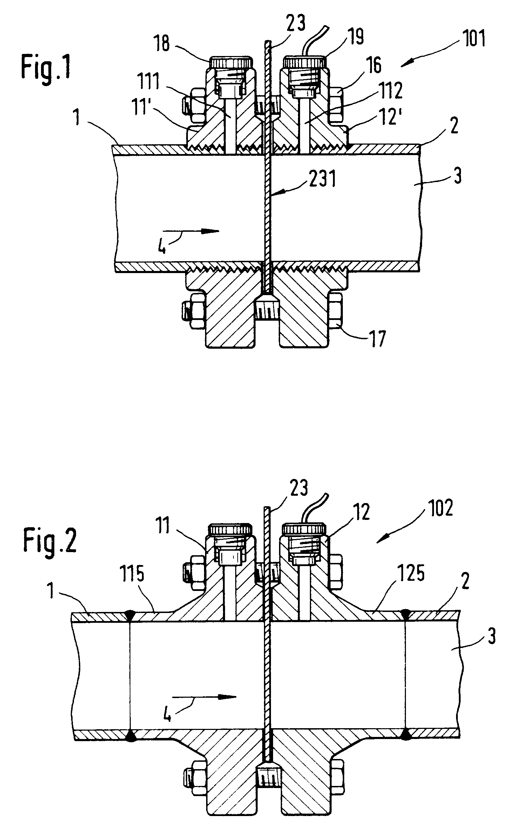

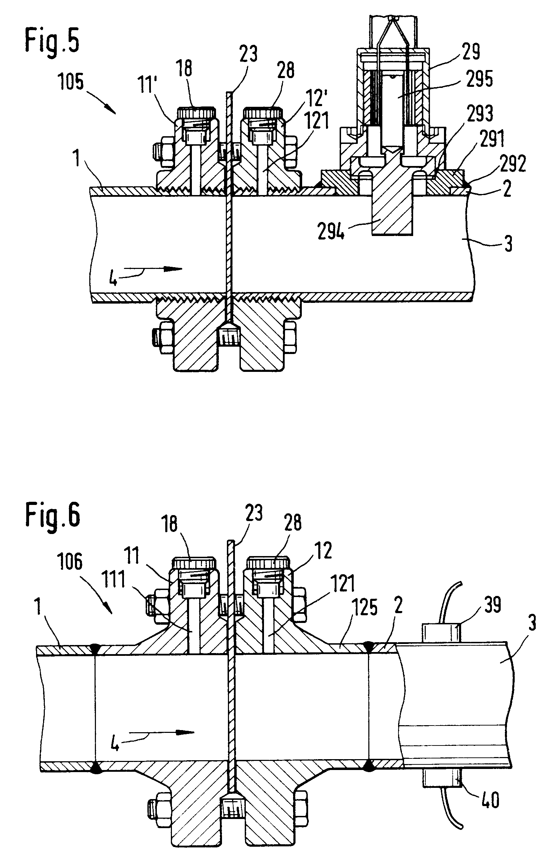

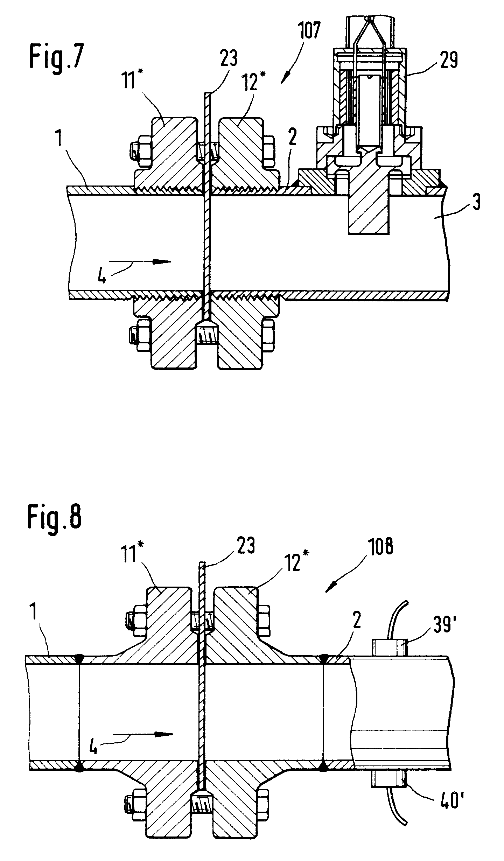

In den Fig. 1 bis 4 sind vier Ausführungsbeispiele eines mit einem Substitutions-Einbausatz nach der ersten Variante der Erfindung versehenen Volumen-Durchflußaufnehmers im Längsschnitt dargestellt. In den Fig. 5 und 6 sind zwei Ausführungsbeispiele eines mit einem Substitutions-Einbausatz nach der zweiten Variante der Erfindung versehenen Volumen-Durchflußaufnehmers im Längsschnitt dargestellt. Schließlich sind in den Fig. 7 und 8 zwei Ausführungsbeispiele eines Volumen-Durchflußaufnehmers nach der dritten Variante der Erfindung im Längsschnitt dargestellt. Somit sind in den Fig. 1 bis 8 acht Ausführungsbeispiele zu sehen, bei denen Radialbohrungen, die den Radialbohrungen 112, 122 von Fig. 24 entsprechen, nicht dargestellt sind.

Während der Blenden-Durchflußaufnehmer nach Fig. 24 strömungsrichtungs-invariant ist, ist bei den acht Ausführungsbeispielen die Strömungsrichtung 4 vorgeben, wie durch den Pfeil veranschaulicht ist. Wenn die zur Strömungsrichtung 4 entgegengesetzte gewünscht wird, sind die unten näher erläuterten Komponenten 18 und 19 zu vertauschen.

Beim ersten Ausführungsbeispiel der ersten Variante nach Fig. 1 ist die dauernde Installation des Durchflußaufnehmers 101 dadurch erfolgt, daß der Flansch 11' auf die Rohrleitung 1 bzw. der Flansch 12' auf die Rohrleitung 2 fluiddicht aufgeschraubt ist.

Entsprechend einem Haupt-Merkmal der Erfindung ist die Blendenscheibe 13 von Fig. 24 durch eine Ringscheibe 23 ersetzt, deren Dicke gleich der Dicke der Blendenscheibe 13 ist. Die lichte Weite der Ringscheibe 23 ist gleich der lichten Weite der Rohrleitungen 1, 2, so daß der Strömungskanal 3 entlang seines Innen-Umfangs durch die Ringscheibe 23 nicht verengt ist.

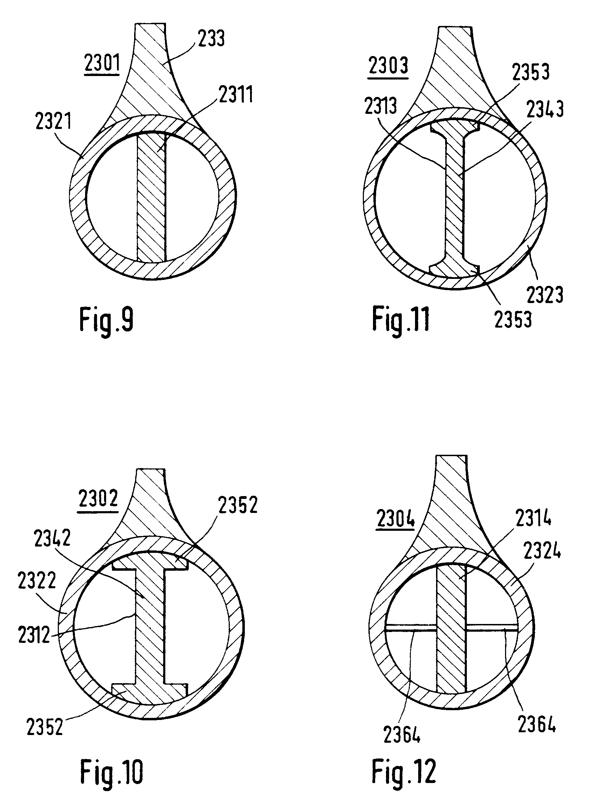

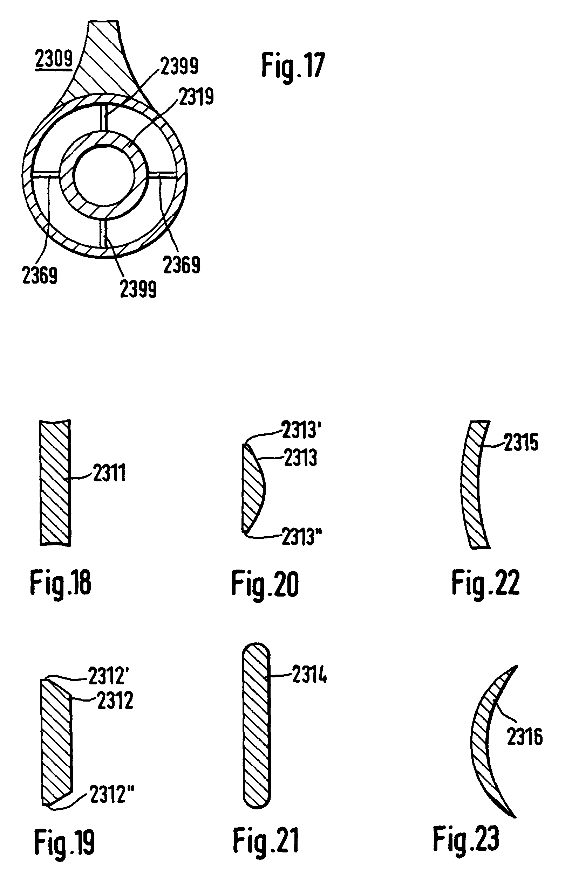

In der lichten Weite der Ringscheibe 23 ist ein einziger Staukörper 231 angeordnet, der in Strömungsrichtung höchstens so dick wie die Ringscheibe 23 ist. Einige bevorzugte und vorteilhafte Vertikalschnittformen des Staukörpers 231 sind in den Fig. 9 bis 17 und vorteilhafte Querschnittsformen sind in den Fig. 18 und 19 dargestellt und unten näher erläutert.

In Fig. 1 ist entsprechend einem weiteren Haupt-Merkmal der Erfindung der nach Fig. 24 in Wirkverbindung mit der Bohrung 111 stehende Drucksensor entfernt, und dieser ist durch eine Vorrichtung 18, z.B. einen Einschraubnippel, zum fluiddichten Verschließen der Bohrung 111 ersetzt. Auch der in Wirkverbindung mit der Bohrung 112 stehende Drucksensor ist entfernt, und dieser ist durch einen Wirbelsensor 19 ersetzt, der fluiddicht in der Bohrung 112 eingesetzt ist.

Die dauernde Installation des Durchflußaufnehmers 102 ist beim zweiten Ausführungsbeispiel der ersten Variante nach Fig. 2 praktisch gleich wie bei Fig. 24 dadurch erfolgt, daß der Flansch 11 mit der Rohrleitung 1 bzw. der Flansch 12 mit der Rohrleitung 2 über ein entsprechendes Rohrstück stumpf verschweißt ist. Die weiteren Einzelheiten von Fig. 2 entsprechen denen von Fig. 1.

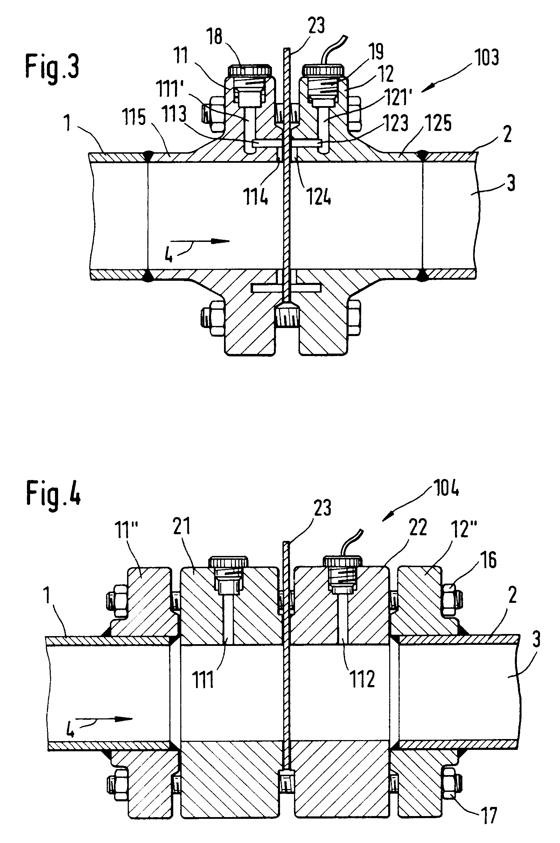

Die dauernde Installation des Durchflußaufnehmers 103 zwischen den Rohrleitungen 1, 2 ist beim dritten Ausführungsbeispiel der ersten Variante nach Fig. 3 wie bei Fig. 2 durch deren Verschweißen mit den Flanschen 11, 12 erfolgt.

Zur Verbesserung der Abnahme der durch die vom Staukörper sich ablösenden Wirbel erzeugten Druckschwankungen ist im Flansch 12 eine Ringnut 123 angebracht, die hier in einer der Bohrung 121 von Fig. 1 entsprechenden Sackbohrung 121' mündet. Ferner ist der Flansch 12 an der der Ringscheibe 23 zugewandten Fläche von seinem Lumen her mit einer Eindrehung 124 versehen, die in der Ringnut 123 mündet. Somit gelangen Druckschwankungen, die direkt stromabwärts von der Ringscheibe 23 auftreten, an den Wirbelsensor 19.

Der Flansch 11 von Fig. 3 ist mit einer in gleicher Weise wie beim Flansch 12 angebrachten Sackbohrung 111', einer entsprechenden Ringnut 113 und einer entsprechenden Eindrehung 114 versehen. Deren Wirkungen werden jedoch nach dem Einbau der Vorrichtung 18 zum Verschließen nicht ausgenutzt. Weitere Einzelheiten von Fig. 3 entsprechen denen von Fig. 1.

Die dauernde Installation des Durchflußaufnehmers 104 zwischen den Rohrleitungen 1, 2 ist beim vierten Ausführungsbeispiel der ersten Variante nach Fig. 4 unter Einfügung eines ersten bzw. eines zweiten Zwischenrings 21 bzw. 22 durch Verspannen mittels der Schrauben 16, 17 erfolgt. Die Bohrung 111 bzw. 112 ist im Zwischenring 21 bzw. 22 angeordnet und demzufolge auch die Vorrichtung 18 zum Verschließen bzw. der Wirbelsensor 19.

Beim Ausführungsbeispiel der Fig. 4 ist der Flansch 11'' stirn- und rückseitig mit der Rohrleitung 1 derart verschweißt - und ebenso der Flansch 12'' mit der Rohrleitung 2 -, daß nur an der Stirnfläche des Flansches eine ebene Dichtfläche gebildet ist. Diese Dichtflächen liegen am entsprechenden Zwischenring 21 bzw. 22 an.

Beim ersten Ausführungsbeispiel der zweiten Variante der Erfindung nach Fig. 5 ist die dauernde Installation des Durchflußaufnehmers 105 wie bei Fig. 1 dadurch erfolgt, daß der Flansch 11' auf die Rohrleitung 1 bzw. der Flansch 12' auf die Rohrleitung 2 fluiddicht aufgeschraubt ist. Es sind wieder die Ringscheibe 23 und die Vorrichtung 18 zum fluiddichten Verschließen vorhanden.

Im Gegensatz zu den vier Ausführungsbeispielen nach den Fig. 1 bis 4 ist bei Fig. 5 auch die Bohrung 121 verschlossen, indem darin eine Vorrichtung 28 zum fluiddichtem Verschließen eingesetzt ist, nachdem der ursprünglich darin angeordnete Drucksensor entfernt worden ist.

In Fig. 5 ist ein Wirbelsensor 29 in der Rohrleitung 2 nahe bei der Ringscheibe 23 angebracht. Der Aufbau des Wirbelsensors 29 entspricht im Prinzip und weitgehend dem in der älteren EP-A 841 545 beschriebenen Wirbelsensor, auf deren Offenbarung zur Vermeidung von Wiederholungen Bezug genommen wird.

Der Wirbelsensor 29 ist in einer in der Rohrwand der Rohrleitung 2 anzubringenden Wandbohrung ausreichenden Durchmessers fluiddicht eingesetzt. Hierzu dient ein Anschlagring 291, der einerseits in die Wandbohrung paßt und andererseits außen auf der Rohrwand aufliegt, wo er an seinem Rand mit der Rohrwand bei 292 verschweißt ist. Der Anschlagring 291 ist ferner an der rohr-abgewandten Seite mit einer Eindrehung 293 versehen, die mit dem Wirbelsensor 29 verschweißt ist.

Der Wirbelsensor 29 umfaßt eine in das strömende Fluid tauchende dünne Sensorfahne 294, die von den vom Staukörper der Ringscheibe 23 erzeugten Strömungswirbeln senkrecht zur Zeichenebene hin und her bewegt wird. Im rückwärtigen Teil des Wirbelsensors 29 befindet sich ein, z.B. kapazitives, Sensorelement 295, das die Bewegungungen der Sensorfahne 294 in ein elektrisches Signal umsetzt.

Die dauernde Installation des Durchflußaufnehmers 106 ist beim zweiten Ausführungsbeispiel der zweiten Variante nach Fig. 6 wie in den Fig. 2 und 3 dadurch erfolgt, daß der Flansch 11 mit der Rohrleitung 1 bzw. der Flansch 12 mit der Rohrleitung 2 über ein entsprechendes Rohrstück stumpf verschweißt ist. Es sind wie bei Fig. 5 die Ringscheibe 23 und die Vorrichtungen 18 bzw. 28 zum fluiddichten Verschließen der Bohrungen 111 bzw. 121 vorhanden.

Als Wirbelsensor dient eine Ultraschall-Anordnung, die einen ersten Ultraschallwandler 39 und einen zweiten Ultraschallwandler 40 umfaßt. Der Ultraschallwandler 39 ist nahe bei der Ringscheibe 23 auf der äußeren Rohrwand der Rohrleitung 2 angeordnet. Diametral gegenüber vom Ultraschallwandler 39 ist der Ultraschallwandler 40 ebenfalls auf der äußeren Rohrwand der Rohrleitung 2 angeordnet. Insb. ist eine Ultraschall-Anordnung nach dem Ultraschall-Clamp-On-Prinzip geeignet.

Der eine der beiden Ultraschallwandler 39, 40 wird von einer nicht dargestellten Auswerte- und Betriebs-Elektronik zu Ultraschallschwingungen erregt und dient dann als Ultraschall-Sender, während der andere der beiden Ultraschallwandler 39, 40 als Ultraschall-Empfänger betrieben wird. Die Zuordnung Ultraschall-Sender/Empfänger kann zeitlich konstant oder zeitlich wechselweise sein. Im letzteren Fall werden also die beiden Ultraschallwandler 39, 40 abwechselnd als Sender oder Empfänger betrieben.

Der Ort, wo die Ultraschall-Anordnung auf dem Strömungskanal 3 aufsitzt, braucht nicht, wie in Fig. 6 aus zeichnerischen Gründen dargestellt ist, auf der Rohrleitung 2 zu liegen, sondern kann sich auch schon auf dem Rohrstück 125 möglichst in der Nähe des Flansches 12 befinden.

Beim ersten Ausführungsbeispiel der dritten Variante der Erfindung nach Fig. 7 ist der Durchflußaufnehmer 107, der keinen Blenden-Durchflußaufnehmer ersetzt, mittels der Flansche 11*, 12* auf dem Strömungskanal 3 dauernd installiert. Die Flansche 11* bzw. 12* sind wie bei den Fig. 1 und 5 auf die Rohrleitungen 1 bzw. 2 aufgeschraubt, haben nun allerdings keine den Bohrungen 111, 121 entsprechende Bohrungen. Die Ringscheibe 23 ist zwischen den miteinander verschraubten Flanschen 11*, 12* eingespannt. Der Wirbelsensor 29 ist wie bei Fig. 5 angeordnet und in die Rohrwand der Rohrleitung 2 eingesetzt.

Bei den Ausführungsbeispielen der Fig. 5 oder 7 kann auch ein piezoelektrisches oder induktives Sensorelement anstatt eines kapazitiven verwendet werden.

Beim zweiten Ausführungsbeispiel der dritten Variante der Erfindung nach Fig. 8 ist der Durchflußaufnehmer 108, der keinen Blenden-Durchflußaufnehmer ersetzt, mittels der Flansche 11* bzw. 12* mit den Rohrleitungen 1 bzw. 2 stumpf verschweißt, wie dies anhand der Fig. 2, 3 und 6 bereits erläutert wurde. Die Flansche 11* bzw. 12* haben wieder wie in Fig. 7 keine den Bohrungen 111, 121 entsprechende Bohrungen.

Auch hier ist wie bei Fig. 7 die Ringscheibe 23 zwischen den miteinander verschraubten Flanschen 11*, 12* eingespannt. Als Wirbelsensor ist eine der Ultraschall-Anordnung von Fig. 6 entsprechende Ultraschall-Anordnung mit den Ultraschallwandlern 39', 40' vorgesehen. Diese sind so angeordnet und können so betrieben werden, wie es anhand der Fig. 6 erläutert wurde.

Anstatt daß die Ultraschall-Anordnung der Fig. 6 oder 8 die beiden Ultraschallwandler 39, 40 bzw. 39', 40' umfaßt, kann auch eine kombinierte Ultraschall-Sender/Empfänger-Anordnung verwendet werden, die dann am Ort des Ultraschallwandlers 39 bzw. 39' anzuordnen wäre.

In den Fig. 9 bis 17 sind Vertikalschnitte parallel zur Scheibenebene von unterschiedlichen Formen der Ringscheibe 23 nach den Fig. 1 bis 8 dargestellt, wie sie bei der Erfindung verwendet werden können. In jeder der Fig. 9 bis 17 umfaßt die Ringscheibe einen einzigen Staukörper, einen Ringteil und einen Ansatzteil 233. Dieser dient der Erleichterung der Handhabung und des Justierens während des Plazierens zwischen den Flanschen 11, 12 etc.

Ein erstes Ausführungsbeispiel der Ringscheibe ist in Fig. 9 mit 2301 bezeichnet. Ein Staukörper 2311 ist über seine gesamte Länge säulenförmig ausgebildet und symmtrisch entlang eines Scheibendurchmessers angeordnet. An den Verbindungsstellen mit dem Ringteil 2321 ist der Staukörper 2311 an die Krümmung des Ringteils 2321 möglichst gut angepaßt.

Ein zweites Ausführungsbeispiel der Ringscheibe ist in Fig. 10 mit 2302 bezeichnet. Ein Staukörper 2312 umfaßt einen Säulenteil 2342, der symmetrisch und entlang eines Scheibendurchmessers angeordnet ist.

Kurz vor den Verbindungsstellen mit dem Ringteil 2322 sind an den Säulenteil 2342 Kalotten 2352 angesetzt, die etwa zwei- bis dreimal breiter als der Säulenteil sind und mit ihm eine rechten Winkel bilden. An den Verbindungsstellen mit dem Ringteil 2322 sind die Kalotten 2352 an die Krümmung des Ringteils 2322 möglichst gut angepaßt.

Ein drittes Ausführungsbeispiel der Ringscheibe ist in Fig. 11 mit 2303 bezeichnet. Ein Staukörper 2313 umfaßt einen Säulenteil 2343, der symmetrisch und entlang eines Scheibendurchmessers angeordnet ist.

Kurz vor den Verbin-dungsstellen mit dem Ringteil 2323 sind an den Säulenteil 2343 Kalotten 2353 angesetzt, die etwa zwei- bis dreimal breiter als der Säulenteil sind. An den Übergangsstellen von Säulenteil 2343 und Kalotten 2353 sind diese abge-rundet. An den Verbindungsstellen mit dem Ringteil 2323 sind die Kalotten 2353 an die Krümmung des Ringteils 2323 möglichst gut angepaßt.

Ein viertes Ausführungsbeispiel der Ringscheibe ist in Fig. 12 mit 2304 bezeichnet. Ein Staukörper 2314 wie bei dem von Fig. 9 über seine gesamte Länge säulenförmig, und er ist symmetrisch entlang eines Scheibendurchmessers angeordnet.

Zusätzlich zur Befestigung am Ringteil 2324 mittels der erwähnten Verbindungsstellen ist der Staukörper 2314 mittels zweier Stützelemente 2364 mit dem Ringteil 2324 verbunden. Die Stützelemente 2364 sind symmetrisch zu einem Scheibendurchmesser angeordnet, der senkrecht auf dem zum Staukörper 2314 gehörenden Scheibendurchmesser steht.

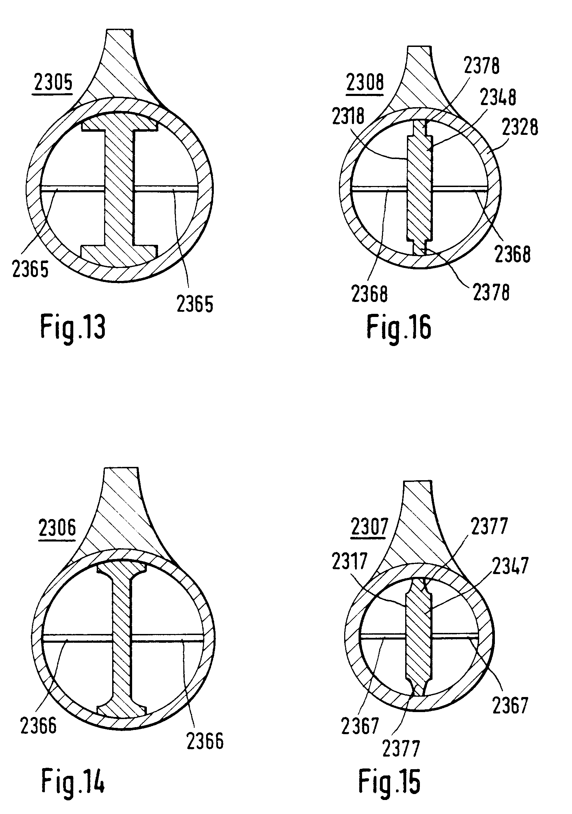

Ein fünftes Ausführungsbeispiel der Ringscheibe ist in Fig. 13 mit 2305 und ein sechstes Ausführungsbeispiel der Ringscheibe in Fig. 14 mit 2306 bezeichnet. Außerdem sind die Stützelemente 2365, 2366 vorgesehen. Fig. 13 ist im übrigen mit Fig. 10 und Fig. 14 mit Fig. 11 weitgehend identisch.

Ein siebtes Ausführungsbeispiel der Ringscheibe ist in Fig. 15 mit 2307 bezeichnet. Ein Staukörper 2317 umfaßt wie bei den Staukörpern der Fig. 10 und 11 den Säulenteil 2347 und zwei Übergangsstücke 2377, die dünner als der Säulenteil 2347 und daran unter Bildung einer Stufe angesetzt sind. Ferner sind wieder Stützelemente 2367 vorgesehen.

Ein achtes Ausführungsbeispiel der Ringscheibe ist in Fig. 16 mit 2308 bezeichnet. Ein Staukörper 2318 umfaßt wie bei Fig. 15 den Säulenteil 2348 und zwei Übergangsstücke 2378, die dünner als der Säulenteil 2348 sind und in diesen abgerundet übergehen. Ferner sind wieder Stützelemente 2368 vorgesehen.

Ein neuntes Ausführungsbeispiel der Ringscheibe ist in Fig. 17 mit 2309 bezeichnet. Ein Staukörper 2319 is als Ringkörper ausgebildet, der durch zwei Stützelemente 2369 und zwei Stützelemente 2399 im Lumen der Ringscheibe 2309 gehaltert ist.

Die beiden Stützelemente 2369 und die beiden Stützelemente 2399 sind symmetrisch entlang von Scheibendurchmessern angeordnet, die senkrecht aufeinander stehen. Der Ringkörper des Staukörpers 2319 schwebt daher sozusagen im Lumen der Ringscheibe 2309.

In den Fig. 18 bis 23 sind Horizontal-Querschnitte von bevorzugten Ausführungsbeispielen des im Lumen der Ringscheibe 23 angeordneten Staukörpers dargestellt, der zur Zeichenebene senkrechte, gerade Mantellinien hat. Dabei liegt in den Fig. 18 bis 23 die Anströmseite jeweils links.

Der Staukörper 231₁ von Fig. 18 hat einen im wesentlichen rechteckigen Querschnitt, allerdings sind die Schmalseiten nach innen leicht konkav ausgebildet, z.B. wie dargestellt, mit einem Krümmungsradius, der größer als die Dicke des Staukörpers 231₁ ist.

Der Querschnitt des Staukörpers 231₂ von Fig. 19 hat im wesentlichen die Form eines Trapezes, z.B. wie dargestellt, die Form eines gleichschenkligen Trapezes. Zur Bildung von Abreißkanten 2312', 2312'' sind die Schenkel des Trapezes an der Anströmseite abgeplattet. Der Winkel, unter dem die Schmalseiten sich mit der Anströmseite schneiden, wird in Abhängigkeit von der Dicke des Staukörpers 231₂ gewählt und beträgt z.B. 20°.

Der Querschnitt des Staukörpers 231₃ von Fig. 20 hat die Form einer auf der Anströmseite ebenen und auf der Abströmseite konvexen Linse, wobei, z.B. wie dargestellt, ebene dünne Schmalseiten als Abreißkanten 2313', 2313'' vorgesehen sind.

Der Staukörper 231₄ von Fig. 21 hat einen im wesentlichen rechteckigen Querschnitt, allerdings sind die Schmalseiten halbkreis-förmig konvex mit einem Krümmungsradius ausgebildet, der gleich der halben Dicke des Staukörpers 231₄ ist.

Der Querschnitt des Staukörpers 231₅ von Fig. 22 hat die Form einer auf der Anströmseite konvexen, auf der Abströmseite konkaven Linse, deren Schmalseiten eben und parallel zu einander sind. Die Querschnittlinie auf der Anströmseite und die auf der Abströmseite sind, wie dargestellt, konzentrische Kreisbögen.

Schließlich hat der Querschnitt des Staukörpers 231₆ von Fig. 23 die Form einer auf der Anströmseite konvexen, auf der Abströmseite konkaven Linse. Die Querschnittlinie auf der Anströmseite ist, wie dargestellt, ein Kreisbogen und die auf der Abströmseite ebenfalls ein Kreisbogen, der allerdings einen größeren Radius als der Kreisbogen auf der Anströmseite hat. Die beiden Kreisbögen schneiden sich an den Schmalseiten des Staukörpers 231₆.

## Patentansprüche

1. Substitutions-Einbausatz für einen an einem Meßort installierten Volumen-Durchflußaufnehmer (10),
- der eine eine genormte Dicke aufweisende Blendenscheibe (13),
-- die zwischen einer ersten und einer zweiten, von einem zu messenden Fluid durchströmten Rohrleitung (1, 2) fluiddicht eingespannt ist und
-- die eine kleinere lichte Weite als die Rohrleitungen hat,
- einen mit einer in der ersten Rohrleitung (1) nahe bei der Blendenscheibe angebrachten Bohrung (111) in Wirkverbindung stehenden ersten Drucksensor für den Fluiddruck vor der Blendenscheibe und
- einen mit einer in der zweiten Rohrleitung (2) nahe bei der Blendenscheibe angebrachten Bohrung (121) in Wirkverbindung stehenden zweiten Drucksensor für den Fluiddruck hinter der Blendenscheibe aufweist,
welcher Substitutions-Einbausatz umfaßt:
- eine die Blendenscheibe (13) ersetzende Ringscheibe (23),
-- deren Dicke gleich der Dicke der Blendenscheibe ist,
-- deren lichte Weite gleich der lichten Weite der Rohrleitungen ist und
-- in deren lichter Weite ein einziger Staukörper (231) angeordnet ist,
--- der in Strömungsrichtung höchstens so dick wie die Ringscheibe ist,
- eine Vorrichtung (18) zum fluiddichten Verschließen der Bohrung (111) der ersten Rohrleitung (1) nach Entfernen des ersten Drucksensors und
- einen Wirbelsensor (19) zum fluiddichten Einsetzen in die Bohrung (121) der zweiten Rohrleitung (2) nach Entfernen des zweiten Drucksensors.

2. Substitutions-Einbausatz für einen an einem Meßort installierten Volumen-Durchflußaufnehmer (10),
- der eine eine genormte Dicke aufweisende Blendenscheibe (13),
-- die zwischen einer ersten und einer zweiten, von einem zu messenden Fluid durchströmten Rohrleitung (1, 2) fluiddicht eingespannt ist und
-- die eine kleinere lichte Weite als die Rohrleitungen hat,
- einen mit einer in der ersten Rohrleitung (1) nahe bei der Blendenscheibe angebrachten Bohrung (111) in Wirkverbindung stehenden ersten Drucksensor für den Fluiddruck vor der Blendenscheibe und
- einen mit einer in der zweiten Rohrleitung (2) nahe bei der Blendenscheibe angebrachten Bohrung (121) in Wirkverbindung stehenden zweiten Drucksensor für den Fluiddruck hinter der Blendenscheibe aufweist,
welcher Substitutions-Einbausatz umfaßt:
- eine die Blendenscheibe (13) ersetzende Ringscheibe (23),
-- deren Dicke gleich der Dicke der Blendenscheibe ist,
-- deren lichte Weite gleich der lichten Weite der Rohrleitungen ist und
-- in deren lichter Weite ein einziger Staukörper (231) angeordnet ist,
--- der in Strömungsrichtung höchstens so dick wie die Ringscheibe ist,
- eine Vorrichtung zum fluiddichten Verschließen (18) der Bohrung (111) der ersten Rohrleitung (1) nach Entfernen des ersten Drucksensors,
- eine Vorrichtung (28) zum fluiddichten Verschließen der Bohrung (121) der zweiten Rohrleitung (2) nach Entfernen des zweiten Drucksensors und
- einen Wirbelsensor (29; 39, 40),
-- der an oder in der zweiten Rohrleitung (2) nahe bei der Ringscheibe (23) angebracht ist.

3. Wirbel-Durchflußaufnehmer (10'), der umfaßt:
- eine eine vorgegebene Dicke aufweisende Ringscheibe (23),
-- die zwischen einer ersten und einer zweiten, von einem zu messenden Fluid durchströmten Rohrleitung (1, 2) fluiddicht einzuspannen ist,
-- deren lichte Weite gleich der lichten Weite der Rohrleitungen ist und
-- in deren lichter Weite ein einziger Staukörper (231) angeordnet ist,
--- der in Strömungsrichtung höchstens so dick wie die Ringscheibe ist, und
- einen Wirbelsensor (29; 39, 40),
-- der an oder in der zweiten Rohrleitung (2) nahe bei der Ringscheibe (23) angebracht ist.

4. Substitutions-Einbausatz nach Anspruch 2 oder 3, bei dem der Wirbelsensor (29) in die Wand der zweiten Rohrleitung (2) fluiddicht eingesetzt ist und ein kapazitives Sensorelement (295) umfaßt.

5. Substitutions-Einbausatz nach Anspruch 2 oder 3, bei dem der Wirbelsensor eine Ultraschall-Anordnung mit zwei diametral auf der Wand der zweiten Rohrleitung (2) fixierten Ultraschallwandlern (39, 40) umfaßt.
